# EUROPÄISCHE PATENTSCHRIFT

(11) **EP 1 008 792 B1**
(45) Veröffentlichungstag und Bekanntmachung des Hinweises auf die Patenterteilung: **18.04.2007**
(21) Anmeldenummer: 99123883.3
(22) Anmeldetag: 02.12.1999
(51) Int. Cl.: F16K 31/06

(54) **Magnetventil**
Magnetic valve
Soupape magnétique

(30) Priorität: 08.12.1998 DE 19856488
(43) Veröffentlichungstag der Anmeldung: 14.06.2000
(73) Patentinhaber: HONEYWELL B.V., 1101 EA Amsterdam Z.O. (NL)
(72) Erfinder: Von Prooijen, Frank, 7827 TK Emmen (NL)
(74) Vertreter: TBK-Patent

(56) Entgegenhaltungen:
- EP-A- 0 486 945
- DE-A- 19 502 671
- US-A- 4 008 876

## Beschreibung

Die Erfindung betrifft ein Magnetventil nach dem Oberbegriff des Anspruchs 1.

Magnetventile der obigen Art sind aus dem Stand der Technik hinlänglich bekannt. So kann zum Beispiel auf die DE-PS 43 05 987 oder die DE-PS 196 32 552 verwiesen werden, die derartige Magnetventile zeigen. Weitere Magnetventile zeigen die DE 195 10 288 A1, DE 195 04 246 A1, DE 43 06 847 A1 sowie DE 195 02 671 A1.

Zum Öffnen eines Magnetventils muß von einer Erregerspule eine Kraft aufgebracht werden, die einerseits gegen die am Ventil-Schließkörper herrschende Druckdifferenz und andererseits gegen die Federkraft einer Schließfeder des Magnetventils wirken muß. Da sich beim Öffnen des Magnetventils die am Ventil-Schließkörper herrschende Druckdifferenz auf Null reduziert, muß nach dem Öffnen die von der Erregerspule erzeugte Kraft nur noch gegen die Federkraft der Schließfeder wirken. Daraus folgt unmittelbar, daß bei großen am Ventil-Schließkörper herrschenden Druckdifferenzen von der Erregerspule eine große Kraft zum Öffnen des Magnetventils erzeugt werden muß, die jedoch nach dem Öffnen des Magnetventils nicht mehr in dieser Größe benötigt wird.

Die aus dem Stand der Technik bekannten Magnetventile tragen dem obigen Wirkungszusammenhang nur insoweit Rechnung, daß sie Erregerspulen aufweisen, die derart bemessen sind, daß sie eine zum Öffnen des Magnetventils ausreichende Kraft erzeugen. Bei großen am Ventil-Schließkörper herrschenden Druckdifferenzen werden große Erregerspulen verwendet. Dies ist insgesamt von Nachteil, da derartige Erregerspulen teuer sind, eine großvolumige Konstruktion bewirken und im Hinblick auf die nach dem Öffnen des Magnetventils auf Null reduzierte Druckdifferenz überdimensioniert sind. Aus der DE 40 28 447 A1 ist ein Magnetventil mit einem beweglichen Ventil-Schließkörper bekannt, der einem stabförmigen Element zugeordnet ist, und mit einem mit dem stabförmigen Element zusammenwirkenden Magnetanker, wobei der Magnetanker eine sich in Längsrichtung des Magnetankers erstreckende, durchgehende Bohrung aufweist, wobei in der Bohrung ein stabförmiges Element angeordnet ist, wobei das stabförmige Element mit einem ersten, dem Ventil-Schließkörper zugewandten Ende aus der Bohrung herausragt und mit dem Ventil-Schließkörper verbunden ist, und wobei in der Bohrung des weiteren ein Federelement angeordnet ist.

Diese aus DE 40 28 447 A1 bekannte Konstruktion ist jedoch zu aufwendig und damit zu kostspielig.

Aus der EP 0 486 945 A1 ist ein Magnetventil bekannt, das durch eine zweistufige Bewegung geöffnet wird, auch wenn der Druckunterschied zwischen dem Einlass des Ventils und dem Auslass des Ventils sehr gering ist.

Es ist Aufgabe der Erfindung ein kompaktes und kostengünstiges Magnetventil zu schaffen.

Die Aufgabe wird durch ein Magnetventil gemäß Anspruch 1 gelöst.

Die Aufgabe der Erfindung wird durch ein Magnetventil mit den Merkmalen des Anspruchs 1 gelöst.

Weitere vorteilhafte Ausgestaltungen der Erfindung ergeben sich aus den Unteransprüchen und der nachfolgenden Beschreibung. In der Beschreibung wird ein bevorzugtes Ausfiihrungsbeispiel der Erfindung anhand der Zeichnung näher erläutert. In der Zeichnung zeigt:

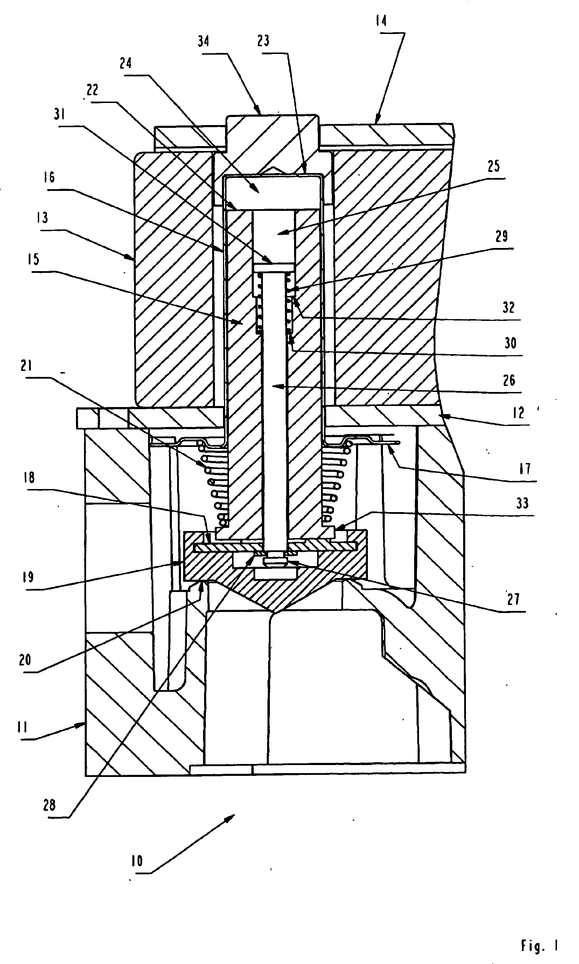

- Fig. 1: ein erfindungsgemäßes Magnetventil im Schnitt.

Das in der Zeichnung dargestellte erfindungsgemäße Magnetventil 10 verfügt über ein Ventilgehäuse 11 mit zugeordneter Gehäuse-Deckplatte 12. Auf die Gehäuse-Deckplatte 12 ist ein elektromagnetischer Linearantrieb aufgesetzt, der aus einer Erregerspule 13, einem Magnetjoch 14 und einem im Innenraum der Erregerspule 13 angeordneten, längs verschiebbaren bzw. vertikal beweglichen Magnetanker 15 besteht. Der Magnetanker 15 ist zumindest teilweise von einer Ankerhülse 16 umgeben. Die Ankerhülse 16 dient in erster Linie als Führung für den Magnetanker 15. In einem unteren Abschnitt 17 ist die Ankerhülse 16 nach außen gebogen, d.h. sie erstreckt sich in diesem Abschnitt 17 senkrecht zu einer Längsachse des Magnetankers 15.

Der Magnetanker 15 wirkt mit einem Tragelement 18 zusammen, dem ein Ventil-Schließkörper 19 zugeordnet ist. Bei geschlossenem Magnetventil 10 sitzt der Ventil-Schließkörper 19 auf einem umlaufenden Ventilsitz 20 auf Bei stromloser Erregerspule 13 wird der Ventil-Schließkörper 19 durch eine Schließfeder 21 auf den Ventilsitz 20 gedrückt und so in der in Figur 1 gezeigten Schließstellung des Magnetventils 10 gehalten. Die Schließfeder 21 kann z.B. als Kegel- oder Schraubenfeder ausgebildet sein.

Zwischen einem oberen Ende 22 des Magnetankers 15 und einem oberen Ende 23 der Ankerhülse 16 ist ein Luftspalt 24 ausgebildet. Bei Magnetventilen nach dem Stand der Technik besteht zwischen der von der Erregerspule 13 zum Öffnen des Magnetventils 10 aufzubringenden Kraft und dem Luftspalt 24 eine hyperbolische Beziehung, wobei die von der Erregerspule 13 aufzubringende Kraft maximal ist, wenn der Luftspalt 24 minimal ist. Zum Öffnen des Magnetventils 10 muß diese Kraft gegen eine am Ventil-Schließkörper 19 herrschende Druckdifferenz und gegen die Federkraft der Schließfeder 21 wirken. Je größer die am Ventil-Schließkörper herrschende Druckdifferenz ist, desto größer muß die von der Erregerspule zum Öffnen des Magnetventils benötigte Kraft sein, was bei Magnetventilen nach dem Stand der Technik die Verwendung großer Erregerspulen bewirkt.

Zur Optimierung bekannter Magnetventile verfügt das Magnetventil der vorliegenden Erfindung im Magnetanker 15 über eine Bohrung 25, die sich durchgehend in Längsrichtung des Magnetankers 15 erstreckt. Innerhalb der Bohrung 25 ist ein längliches, stabförmiges Element 26 angeordnet. Mit einem ersten, dem Tragelement 18 zugewandten Ende 27 ragt das stabförmige Element 26 aus der Bohrung 25 heraus. Figur 1 kann entnommen werden, daß das stabförmige Element 26 mit diesem Ende 27 durch eine Bohrung des Tragelements 18 hindurchragt und über ein Klemmelement 28 mit dem Tragelement 18 verbunden ist. In der Bohrung 25 ist des weiteren ein Federelement 29 positioniert. Das Federelement 29 stützt sich mit einem Ende auf einem unteren Absatz 30 der Bohrung 25 und mit einem anderen Ende auf einem zweiten Ende 31 des stabförmigen Elements 26 ab. Ein weiterer Absatz 32 innerhalb der Bohrung 25, der oberhalb des Absatzes 30 positioniert ist, bildet einen Anschlag für das zweite Ende 31 des stabförmigen Elements 26.

Die bereits erwähnte Schließfeder 21 des Magnetventils 10 ist zwischen der Ankerhülse 16 und dem Ventil-Schließkörper 19 angeordnet, wobei sich die Schließfeder 21 mit einem Ende auf dem Abschnitt 17 der Ankerhülse 16 und mit einem anderen Ende auf einem unteren Abschnitt 33 des Magnetankers 15 abstützt, wobei dieser Abschnitt 33 als umlaufender Wulst ausgebildet ist.

Die Funktionsweise des erfindungsgemäßen Magnetventils 10 wird unter Bezugnahme auf Figur 1 dargestellt: Zum Öffnen des Magnetventils 10 wird die Erregerspule 13 aktiviert. Die von der Erregerspule 13 bereitgestellte Magnetkraft zieht den Magnetanker 15 entgegen der Schließkraft der Schließfeder 21 nach oben, wodurch die auf den Ventil-Schließkörper 19 einwirkende Schließkraft reduziert wird. In diesem Zustand ist das Ventil noch geschlossen, d.h. der Ventil-Schließkörper 19 sitzt noch auf dem Ventilsitz 20 auf Beim weiteren Nachobenziehen des Magnetankers 15 muß der Magnetanker 15 lediglich gegen die Federkräfte der Schließfeder 21 und des Federelements 29 bewegt werden, bis der als Anschlag wirkende Absatz 32 am oberen Ende 31 des stabförmigen Elements 26 zur Anlage kommt. Kommt der Absatz 32 des Magnetankers 15 am oberen Ende 31 des stabförmigen Elements 26 zur Anlage, so wird die zwischen dem Magnetanker 15 und einem Stopper 34 des Magnetventils 10 erzeugte Kraft auf das noch geschlossene Ventil einwirken, also den Ventil-Schließkörper 19 vom Ventilsitz 20 abheben und so das Magnetventil 10 öffnen. Die vom Federelement 29 bereitgestellte Federkraft reicht dann aus, um den Ventil-Schließkörper 19, das Tragelement 18 und das stabförmige Element 26 insgesamt nach oben zu bewegen.

In diesem Zusammenhang sei noch angemerkt, daß die von dem Federelement 29 bereitgestellte Federkraft kleiner ist als die von der Schließfeder 21 bereitgestellte Federkraft. Darüber hinaus ergibt sich aus der oben beschriebenen Funktionsweise des erfindungsgemäßen Magnetventils 10, daß der Abstand zwischen dem Absatz 32 der Bohrung 25 und dem oberen Ende 31 des stabförmigen Elements 26 kleiner sein muß als der totale Hubbereich des Magnetankers 15.

Das erfindungsgemäße Magnetventil 10 benötigt demnach zum Öffnen eines Ventils von bestimmter Größe kleinere und kostengünstigere Erregerspulen als die Magnetventile nach dem Stand der Technik. Hierdurch wird die Baugröße verringert. Auch werden die Arbeitsgeräusche des Magnetventils hierdurch positiv beeinflußt.

### Bezugszeichenliste:

- 10: Magnetventil
- 11: Ventilgehäuse
- 12: Gehäuse-Deckplatte
- 13: Erregerspule
- 14: Magnetjoch
- 15: Magnetanker
- 16: Ankerhülse
- 17: Abschnitt
- 18: Tragelement
- 19: Ventil-Schließkörper
- 20: Ventilsitz
- 21: Schließfeder
- 22: Ende
- 23: Ende
- 24: Luftspalt
- 25: Bohrung
- 26: Element
- 27: Ende
- 28: Klemmelement
- 29: Federelement
- 30: Absatz
- 31: Ende
- 32: Absatz
- 33: Abschnitt
- 34: Stopper

## Patentansprüche

1. Magnetventil mit einem beweglichen Ventil-Schließkörper (19), der einem Tragelement (18) zugeordnet ist, und mit einem mit dem Tragelement (18) zusammenwirkenden Magnetanker (15), mit folgenden Merkmalen:
der Magnetanker (15) weist eine sich in Längsrichtung des Magnetankers (15) erstreckende, durchgehende Bohrung (25) auf;
in der Bohrung (25) ist ein stabförmiges Element (26) angeordnet;
das stabförmige Element (26) ragt mit einem ersten, dem Tragelement (18) zugewandten Ende (27) aus der Bohrung (25) heraus und ist an dem dem Tragelement (18) zugewandten Ende (27) mit dem Tragelement (18) verbunden;
die Bohrung (25) des Magnetankers (15) weist zwei Absätze (30,32) auf;
in der Bohrung (25) ist des weiteren ein Federelement (29) angeordnet;
das Federelement (29) ist zwischen einem ersten Absatz (30) und einem zweiten Ende (31) des stabförmigen Elements (26) angeordnet und greift an diesen an ;
einer Erregerspule (13) zum Erzeugen einer das Magnetventil öffnenden Magnetkraft, wenn die Erregerspule (13) aktiviert ist;
einer Schließfeder (21) zum Drücken des Ventil-Schließkörpers (19) auf einen Ventilsitz (29) bei stromloser Erregerspule (13),
**dadurch gekennzeichnet, dass**
der andere Absatz (32) einen Anschlag für das zweite Ende (31) des stabförmigen Elements (26) bildet, wobei der andere Absatz (32) zwischen dem ersten Absatz (30) und dem zweiten Ende (31) des stabförmigen Elements (26) positioniert ist, und
die Federkraft des Federelements (29) kleiner ist als die Federkraft der Schließfeder (21), und der Abstand von dem anderen Absatz (32) zu dem verbreiterten zweiten Ende (31) des stabförmigen Elements (26) bei einem nicht aktivierten Zustand der Erregerspule (13) kleiner ist als der totale Hubbereich des Magnetankers (15).

2. Magnetventil nach Anspruch 1, **dadurch gekennzeichnet, dass** das erste Ende (27) des stabförmigen Elements (26) durch eine Bohrung des Tragelements (18) hindurchragt und über ein Klemmelement (28) mit dem Tragelement (18) verbunden ist.

3. Magnetventil nach Anspruch 1 oder 2, **dadurch gekennzeichnet, dass** der Magnetanker (15) von einer Ankerhülse (16) umgeben ist, wobei die Schließfeder (21) zwischen einem Abschnitt (17) der Ankerhülse (16) und einem Abschnitt (33) des Magnetankers (15) angeordnet ist und an diesen Abschnitten (17, 33) angreift, wobei der Abschnitt (33) des Magnetankers (15) des weiteren auf dem Tragelement (18) aufsitzt.

## Claims

1. Solenoid valve with a mobile valve-closing element (19) assigned to a carrier element (18) and with a solenoid armature (15) cooperating with the carrier element (18), with the following features:
the solenoid armature (15) has a through bore (25) extending in the longitudinal direction of the solenoid armature (15);
a rod-shaped element (26) is arranged inside the bore (25);
the rod-shaped element (26) has a first end, viz. the end (27) towards the carrier element (18), jutting out of the bore (25), and is attached to the carrier element (18) at the end (27) towards the carrier element (18);
the bore (25) in the solenoid armature (15) has two shoulders (30, 32);
a spring element (29) is also arranged inside the bore (25);
the spring element (29) is arranged between a first shoulder (30) and a second end (31) of the rod-shaped element (26), and bears on these;
an exciting coil (13) generating a magnetic force opening the solenoid valve when the exciting coil (13) is activated;
a closing spring (21) pressing the valve-closing element (19) on to a valve seat (29) when the exciting coil (13) is currentless;
**characterized in that**
the other shoulder (32) forms a stop for the second end (31) of the rod-shaped element (26), and is located between the first shoulder (30) and the second end (31) of the rod-shaped element (26), and
the spring force of the spring element (29) is smaller than the spring force of the closing spring (21), and the distance from the other shoulder (32) to the broadened second end (31) of the rod-shaped element (26) when the exciting coil (13) is in a non-activated condition is smaller than the total stroke of the solenoid armature (15).

2. Solenoid valve according to Claim 1, **characterized in that** the first end (27) of the rod- shaped element (26) protrudes through a hole in the carrier element (18) and is attached to the carrier element (18) by a clip element (28).

3. Solenoid valve according to Claim 1 or Claim 2, **characterized in that** the solenoid armature (15) is surrounded by an armature sleeve (16), the closing spring (21) being arranged between a portion (17) of the armature sleeve (16) and a portion (33) of the solenoid armature (15) and bearing on these portions (17, 33), and the portion (33) of the solenoid armature (15) moreover being seated on the carrier element (18).

## Revendications

1. Vanne magnétique avec un corps de fermeture de vanne mobile (19) qui est associé à un élément de support (18), et un induit magnétique (15) qui coopère avec l'élément de support (18), avec les propriétés suivantes :
l'induit magnétique (15) présente un perçage (25) qui s'étend d'un bout à l'autre dans son sens longitudinal ;
dans le perçage (25) est disposé un élément en forme de tige (26) ;
l'élément en forme de tige (26) dépasse du perçage (25) avec une première extrémité (27) tournée vers l'élément de support (18) et est relié à ce dernier au niveau de cette extrémité (27) tournée vers l'élément de support (18) ;
le perçage (25) de l'induit magnétique (15) présente deux épaulements (30, 32) ;
un élément élastique (29) est également disposé dans le perçage (25) ;
l'élément élastique (29) est disposé entre un premier épaulement (30) et une seconde extrémité (31) de l'élément en forme de tige (26) et agit sur celle-ci ;
avec une bobine d'excitation (13) pour produire, quand elle est activée, une force magnétique qui ouvre la vanne magnétique ;
et avec un ressort de fermeture (21) pour presser le corps de fermeture de vanne (19) sur un siège de vanne (20) quand la bobine d'excitation (13) est hors tension,
**caractérisée en ce que** le second épaulement (32) forme une butée pour la seconde extrémité (31) de l'élément en forme de tige (26), ce second épaulement (32) étant placé entre le premier épaulement (30) et la seconde extrémité (31) de l'élément en forme de tige (26), et
la force élastique de l'élément élastique (29) est inférieure à celle du ressort de fermeture (21), et la distance entre le second épaulement (32) et la seconde extrémité élargie (31) de l'élément en forme de tige (26), dans un état non activé de la bobine d'excitation (13), est plus petite que la zone de course totale de l'induit magnétique (15).

2. Vanne magnétique selon la revendication 1, **caractérisée en ce que** la première extrémité (27) de l'élément en forme de tige (26) traverse un perçage de l'élément de support (18) et est reliée à l'élément de support (18) par l'intermédiaire d'un élément de serrage (28).

3. Vanne magnétique selon la revendication 1 ou 2, **caractérisée en ce que** l'induit magnétique (15) est entouré par une douille d'induit (16), le ressort de fermeture (21) étant disposé entre une partie (17) de la douille (16) et une partie (33) de l'induit (15) et agissant sur ces parties (17, 33), et la partie (33) de l'induit magnétique (15) étant par ailleurs posée sur l'élément de support (18).
